# EUROPÄISCHE PATENTANMELDUNG

(11) **EP 1 693 154 A1**
(43) Veröffentlichungstag der Anmeldung: **23.08.2006**
(21) Anmeldenummer: 06003223.2
(22) Anmeldetag: 17.02.2006
(51) Int. Cl.: B25B 21/00, B25B 23/14, B25B 17/00

(54) **Werkzeugadapter**

(30) Priorität: 18.02.2005 DE 102005009316
(71) Anmelder: Adolf Würth GmbH & Co. KG, 74653 Künzelsau (DE)
(72) Erfinder: Reuther, Herbert, 74238 Gommersdorf (DE)
(74) Vertreter: Patentanwälte Ruff, Wilhelm, Beier, Dauster & Partner

(57) **Zusammenfassung**

Ein Werkzeugadapter zum Befestigen von Hohlwanddosen (8) enthält in zwei parallelen Plattenelementen (1,2) gelagert eine Aufnahme (3) für einen Antrieb durch einen Schrauber und zwei Aufnahmen (4) für Werkzeugbits. Die Aufnahme (3) für den Schrauber ist mit beiden Abtriebsaufnahmen (4) drehverbunden. In den beiden Abtriebsaufnahmen (4) werden Werkzeugbits eingesetzt. Dadurch können beide Befestigungsschrauben der Befestigung der Hohlwanddose gleichzeitig festgeschraubt werden.

## Beschreibung

Die Erfindung betrifft einen Werkzeugadapter, insbesondere einen solchen, mit dem Hohlwanddosen befestigt werden können.

Hohlwanddosen sind Hilfsmittel, um elektrische Installationsteile, beispielsweise Schalter, Steckdosen, Verteiler oder dergleichen in Hohlwänden unter Putz unterzubringen. Die Hohlwanddosen sind aus Kunststoff gefertigt und werden mit Hilfe von Klammern oder ähnlichen Einrichtungen an der Rückseite der Hohlwand im Bereich der Durchbrechung festgelegt. Zum Anziehen der Klammern oder sonstigen Befestigungen dienen Schrauben, die von der Vorderseite her fest gezogen werden können. Hierbei ist je nach Dicke der Hohlwand häufig ein relativ langer Schraubweg erforderlich, was zu relativ langen Schraubzeiten führt. Daher ist es bei großen Mengen üblich, dass das Festschrauben mit Hilfe von elektrischen Schraubern geschieht.

Die Hohlwanddosen haben in der Regel zwei diametral gegenüber liegende Festlegeeinrichtungen und dementsprechend auch zwei von der Vorderseite her zugängliche Schrauben. Da die Hohlwanddosen nur zur Unterbringung und gegebenenfalls zur Festlegung gedacht sind, haben sie keine sehr große Stabilität. Das Ausweichen der Hohlwanddosen nach außen wird durch die Form der Durchbrechung, in die sie eingesteckt werden, verhindert. Denn die Hohlwanddose liegt mit ihrem Außenumfang an dem Rand der Öffnung an. Es besteht aber die Möglichkeit, insbesondere beim unachtsamen Festziehen der Schraubeinrichtungen, dass die Hohlwanddose nach innen ausweicht.

Es ist bereits eine Vorrichtung zum Montieren von Unterputzschaltern und Unterputzsteckdosen bekannt (DE 10033598). Bei der Vorrichtung sind zwei durch jeweils einen Elektromotor angetriebene Schraubendreher vorhanden. Die Steckdose wird mit einer magnetischen Metallplatte der Vorrichtung vor dem Einsetzen verbunden.

Ebenfalls bekannt ist ein Mehrfachschrauber (DE 1603755), mit dessen Hilfe Schrauben oder Muttern über einen bestimmten Drehwinkel gleichmäßig und gleichzeitig angezogen werden sollen.

Der Erfindung liegt die Aufgabe zu Grunde, eine Möglichkeit zu schaffen, das Festlegen der Hohlwanddosen zu vereinfachen.

Zur Lösung dieser Aufgabe schlägt die Erfindung einen Werkzeugadapter mit den im Anspruch 1 genannten Merkmalen vor. Weiterbildungen der Erfindung sind Gegenstand von Unteransprüchen. Der Werkzeugadapter kann bei allen Elementen zur Befestigung dienen, die einen ähnlichen Aufbau wie eine Hohlwanddose aufweisen.

Der Werkzeugadapter soll so bedient werden, dass ein Elektroschrauber oder eine Bohrmaschine mit einem entsprechenden Abtriebselement in Eingriff mit der Antriebsaufnahme gebracht wird. Da der Adapter sich mit der angetriebenen Einrichtung des Schraubers mit drehen würde, hat er eine Positioniereinrichtung, die in Eingriff mit der Hohlwanddose gebracht werden kann und das Mitdrehen des Adapters verhindert. Dann kann das Festziehen der Schraube der Festlegeeinrichtung mit Hilfe eines Werkzeugbits geschehen, der in der Abtriebsaufnahme des Werkzeugadapters eingesetzt ist. Es ist möglich, unterschiedliche Werkzeugbits zu verwenden, ohne den Schrauber zu ändern.

Erfindungsgemäß kann in Weiterbildung vorgesehen sein, dass die Positioniereinrichtung nicht nur zur Verhinderung des Mitdrehens des Werkzeugadapters dient, sondern auch derart ausgebildet ist, dass sie das Ausweichen der Wand der Hohlwanddose nach innen verhindert.

In nochmaliger Weiterbildung der Erfindung kann vorgesehen sein, dass die Positioniereinrichtung des Werkzeugadapters derart ausgebildet ist, dass sie an zwei diametralen Stellen der Hohlwanddose angreift, vorzugsweise an der Innenseite der Wand der Hohlwanddose.

In nochmaliger Weiterbildung der Erfindung kann vorgesehen sein, dass die Positioniereinrichtung derart ausgebildet ist, dass sie die Abtriebsaufnahme gegenüber der durch das Werkzeugbit zu verdrehenden Schraube ausrichtet. Dies gilt insbesondere dann, wenn der Werkzeugadapter, der eine gewisse Größe aufweist, die direkte Sicht auf die Spitze des Werkzeugbits behindert.

Zur Ausrichtung des Werkzeugbits und zur Verhinderung des Einknickens der Wand der Hohlwanddose nach innen kann die gleiche Ausbildung des Werkzeugadapters dienen.

Der Werkzeugadapter kann nach einem weiteren Merkmal der Erfindung derart ausgebildet sein, dass die Antriebsaufnahme und die mindestens eine Abtriebsaufnahme in zwei parallelen beabstandeten Plattenelementen gelagert sind. Diese Plattenelemente können auch zur Lagerung der Drehverbindung zwischen der Antriebsaufnahme und der Abtriebsaufnahme dienen.

Es kann erfindungsgemäß vorgesehen sein, dass in der Abtriebsaufnahme ein Werkzeugbit schon fest eingesetzt bzw. angeordnet ist. Es ist aber ebenfalls möglich und liegt im Rahmen der Erfindung, dass die Abtriebsaufnahme zum auswechselbaren Anbringen eines Werkzeugbits ausgebildet ist.

Insbesondere schlägt die Erfindung vor, dass der Werkzeugadapter zwei gleichsinnig angetriebene Abtriebsaufnahmen aufweist, so dass in einem Arbeitsgang beide Schrauben fest gezogen werden können.
Es kann erfindungsgemäß vorgesehen sein, dass eine der beiden Drehverbindungen, insbesondere auch beide Drehverbindungen, eine Art Rutschkupplung aufweisen.

Eine Möglichkeit, wie die Drehverbindung aufgebaut sein kann, besteht darin, dass diese ein umlaufendes Getriebeelement aufweist, beispielsweise einen Riemen oder dergleichen. Auch ein Gummiband, das um die Elemente herum gelegt ist, kann diese Aufgabe erfüllen.

Es ist auch möglich und wird von der Erfindung vorgeschlagenen, dass in Drehverbindung mindestens ein Zahnrad aufweist. Dabei ist es sinnvoll, die Zahnradverbindung so auszugestalten, dass sich die Drehrichtung zwischen Antriebsaufnahme und Abtriebsaufnahme nicht umkehrt.

In Weiterbildung der Erfindung kann vorgesehen sein, dass in jedem Abtrieb eine Drehmomentbegrenzung angeordnet ist, wobei vorzugsweise beide Drehmomentbegrenzungen unabhängig voneinander arbeiten. Dadurch wird es möglich, die beiden Befestigungsschrauben bis zu ihrem Sollwert anzuziehen, unabhängig davon, wie weit die jeweiligen Schrauben verdreht werden müssen. Der Weg, um den die Schrauben angezogen werden müssen, kann von der Einbausituation abhängen und an beiden Seiten der Unterputzdose deutlich unterschiedlich sein.

In nochmaliger Weiterbildung der Erfindung kann vorgesehen sein, dass der Werkzeugadapter ein Gehäuse aufweist, in dem die Getriebeverbindung zwischen der Antriebsaufnahme und der mindestens einen Abtriebsaufnahme untergebracht ist. Aus diesem Gehäuse ragt beispielsweise an der Vorderseite ein Sechskant heraus, der in ein Bohrfutter eines Bohrers oder in die entsprechende Sechskantaufnahme eines Schraubers an Stelle eines Bits eingesetzt wird. Auf der gegenüberliegenden Seite ragen nur die beiden Schrauberbits heraus, mit denen die Dose festgeschraubt wird.

Insbesondere kann vorgesehen sein, dass an dem Gehäuse die Positioniereinrichtung ausgebildet ist, die zum Positionieren des Werkzeugadapters gegenüber der Dose dienen kann. Beispielsweise kann die Positioniereinrichtung eine der Form der Hohlwanddose entsprechende mindestens teilweise ausgebildete Schürze aufweisen, die zur Anlage an der Innenseite der Wand der Dose bestimmt ist. Diese Schürze kann schon beim Einführen des Werkzeugadapters wirksam sein, bevor die Schraubendreherbits in Eingriff mit den Schrauben der Dose gelangen.

Dieses Gehäuse kann auch dazu dienen, die erwähnte Wasserwaagenlibelle aufzunehmen. Diese kann dabei insbesondere in einer Ausnehmung des Gehäuses angeordnet sein, um sie einerseits gut sichtbar anzuordnen und andererseits gegen Beschädigungen zu sichern.

Weitere Merkmale, Einzelheiten und Vorzüge der Erfindung ergeben sich aus den Patentansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: eine Seitenansicht eines Werkzeugadapters nach der Erfindung;
- Figur 2: eine Draufsicht auf die Anordnung der Figur 1 von oben in Figur 1;
- Figur 3: eine Stirnansicht eines Teils einer Hohlwanddose;
- Figur 4: eine der Figur 1 entsprechende Ansicht einer zweiten Ausführungsform eines Werkzeugwerkzeugadapters nach der Erfindung;
- Figur 5: eine der Figur 2 entsprechende Darstellung der zweiten Ausführungsform;
- Figur 6: eine Untenansicht der Ausführungsform nach Figur 1 und 2.
- Figur 7: eine Seitenansicht eines Werkzeugadapters bei einer geänderten Ausführungsform;
- Figur 8: die Rückansicht des Werkzeugadapters der Figur 7 von links in Figur 7;
- Figur 9: einen Schnitt längs Linie IX-IX in Figur 7 durch den Werkzeugadapter.

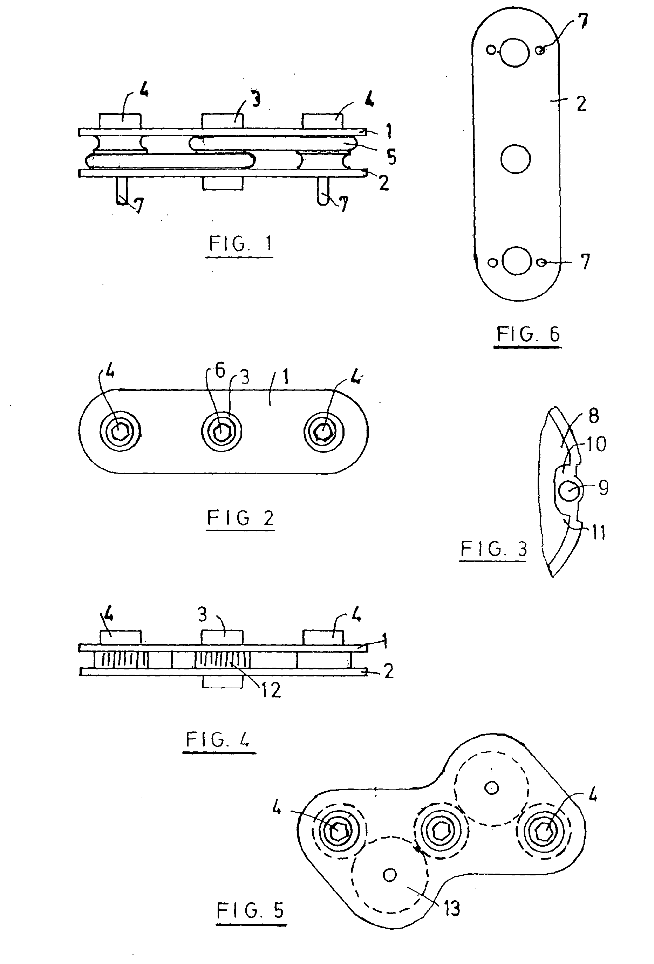

Figur 1 zeigt eine Seitenansicht eines Werkzeugadapters, mit dessen Hilfe zwei Schrauben von Befestigungseinrichtungen einer Hohlwanddose gleichzeitig festgeschraubt werden können. Der Werkzeugadapter enthält zwei parallel zueinander verlaufende Plattenelemente 1, 2, in denen eine Antriebsaufnahme 3 und zwei Abtriebsaufnahmen 4 drehbar gelagert sind. Zwischen der Antriebsaufnahme 3 und jeder der beiden Abtriebsaufnahmen 4 ist eine Drehverbindung vorhanden, die bei der Ausführungsform nach Figur 1 durch einen Gummiring 5 gebildet wird. Dieser Gummiring, der mit Spannung um die beiden drehbar gelagerten Teile herum gelegt ist, hat den Vorteil, dass er gleichzeitig eine Rutschkupplung bildet.

Figur 2 zeigt die Draufsicht auf die Anordnung der Figur 1, so dass die zu sehende Platte die obere Platte 1 ist. Die Antriebsaufnahme 3 weist im dargestellten Beispiel eine sechskantige Innenöffnung 6 auf, in die ein entsprechender sechskantiger Ansatz einer Bohrmaschine eingesetzt werden kann. Die Abtriebsaufnahmen 4 weisen ebenfalls sechskantige Innenöffnungen auf, die in diesem Fall dann zum Einsetzen von Werkzeugbits dienen. Diese Werkzeugbits können axial festgelegt sein, beispielsweise durch Sprengringe oder ähnliche Einrichtungen. Sie ragen an der Unterseite der unteren Platte 2 heraus. Dies ist im Einzelnen nicht dargestellt. Anstelle einer sechskantigen Innenöffnung können auch runde oder viereckige Ansätze vorhanden sein.

An der Unterseite der Platte 2, siehe auch Figur 6, sind vier Zapfen 7 angeordnet, die von der unteren Platte 2 nach unten weg ragen. Damit hat es folgende Bewandtnis. Hierzu wird zunächst auf die Figur 3 verwiesen. Figur 3 zeigt einen Teil einer Stirnansicht einer Hohlwanddose 8.

Die Hohlwanddose 8 hat eine relativ dünne Außenwand. Zur Führung der Befestigungsschrauben sind aber durchgehende Kanäle vorhanden, die gegenüber dem Außenumfang der Hohlwanddose etwas nach innen versetzt sind. Dadurch wird an der Innenseite der Wand der Hohlwanddose ein Pfeiler 10 gebildet. An der diametral gegenüberliegenden Stelle der Hohlwanddose ist ein gleicher Pfeiler 10 vorhanden. Zu beiden Seiten des Pfeilers 10 sind daher Begrenzungsflanken 11 gebildet. Die an der Unterseite der unteren Platte 2 des Adapters angeordneten Zapfen 7, siehe auch Figur 6, sind so dimensioniert, dass sie an diesen Seitenflanken 11 der Pfeiler 10 zur Anlage kommen. Jeder Zapfen 7 liegt also an der Übergangszone zwischen der Innenseite der Wand und der Seitenflanke 11 des Pfeilers 10. Dadurch wird einerseits ein Mitdrehen des Werkzeugadapters beim Antrieb durch einen Schrauber und andererseits ein Ausweichen der Wand der Hohlwanddose nach innen verhindert. Diese Zapfen 7 bilden eine Positioniereinrichtung, die zur Positionierung des Werkzeugadapters dienen. Die Zapfen 7, die in den Figuren nicht maßstabsgerecht dargestellt sind, sind so dimensioniert, dass sie schon eine Positionierung des Werkzeugadapters bewirken, bevor die Werkzeugbits in die beiden Schrauben eingreifen können.

Statt der vier Zapfen 7, die bei dem in den Figuren dargestellten Ausführungsbeispiel vorhanden sind, könnte auch ein voll ausgebildeter Steg oder ein nur teilweise ausgebildeter Steg vorhanden sein.

Nun zu der Ausführungsform nach Figur 4 und 5. Hier ist die in den beiden Plattenelementen 1, 2 drehbar gelagerte Antriebsaufnahme 3 in ihrem Bereich zwischen den beiden Plattenelementen 1, 2 mit einer Verzahnung 12 versehen. Das Gleiche gilt für die beiden Abtriebsaufnahmen 4. Zwischen der Antriebsaufnahme 3 und jeder der beiden Abtriebsaufnahmen ist dann ein Zahnrad 13 eingesetzt, siehe Figur 5. Durch das mit der Antriebsaufnahme 3 und der Abtriebsaufnahme 4 kämmende Zahnrad 13 wird erreicht, dass sich die Abtriebsaufnahmen 4 in der gleichen Drehrichtung drehen wie die Antriebsaufnahme. Bei einer direkten Zahnradverbindung zwischen Antriebsaufnahme 3 und Abtriebsaufnahme 4 würde die Drehrichtung sich umkehren. Dies kann ebenfalls eine Möglichkeit für einen Werkzeugadapter bilden, sofern man einen links drehenden Schrauber verwendet.

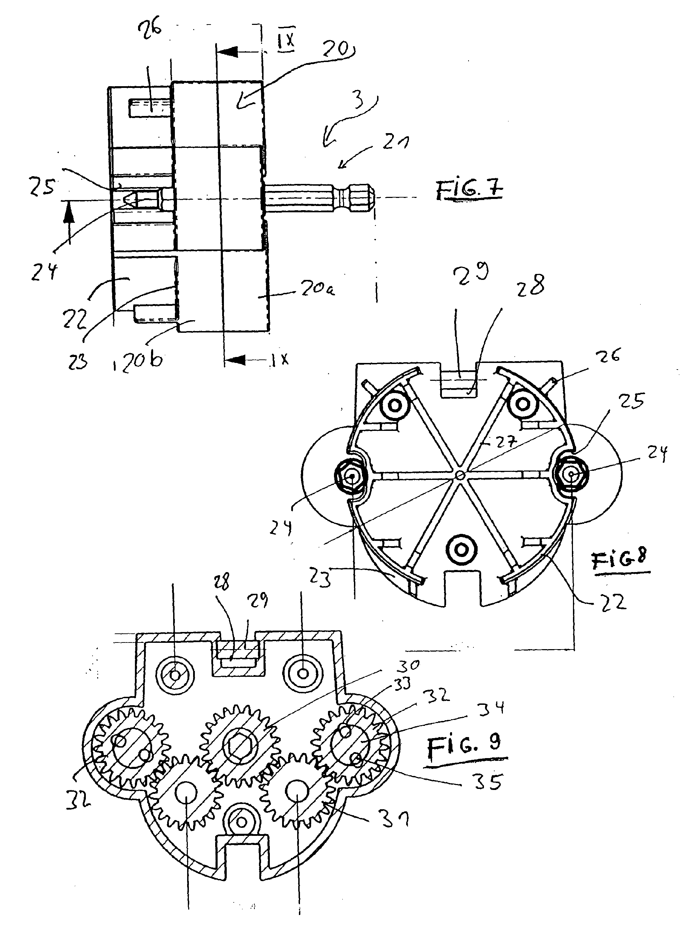

Figur 7 zeigt jetzt eine Seitenansicht eines Werkzeugadapters nach einer weiteren Ausführungsform. Der Werkzeugadapter enthält ein Gehäuse 20, das aus einer vorderen Schale 20a und einer hinteren Schale 20b aufgebaut und zusammengesetzt ist. An seiner in Figur 7 rechten Seite, der Vorderseite, ragt aus dem Gehäuse 20 ein in dem Gehäuse drehbar gelagerter Sechskantansatz 21 heraus, der die Schaftform eines üblichen Schrauberbits aufweist, also einen sechskantigen Querschnitt mit einer umlaufenden Nut.

Auf der gegenüberliegenden Rückseite des Gehäuses, in Figur 7 links, ist eine Schürze 22 gebildet, die gegenüber dem Außenumfang des Gehäuses 20 nach innen versetzt ist. Die axiale Erstreckung dieser Schürze 22 ist größer als die aus der Rückseite 23 herausragende Länge des Schrauberbits 24. Der Schrauberbit 24 ist in einer Ausnehmung 25 der Schürze untergebracht. An der in Figur 7 zu sehenden Außenseite der Schürze 22 sind über den Umfang verteilt mehrere Stege 26 ausgebildet, die von der Rückseite 23 des Gehäuses 20 ausgehen.

Figur 8 zeigt nun eine Stirnansicht des Werkzeugadapters der Figur 7 von links in Figur 7. Die Ausnehmungen 25, in denen die Schrauberbits 24 untergebracht sind, entsprechen der Form der üblicherweise verwendeten Anschlussdosen, siehe hierzu auch die Figur 3, aus der zu sehen ist, dass die Öffnungen für die Schrauben der Anschlussdosen in solchen Säulen untergebracht sind. Beim Einsetzen des Werkzeugadapters der Figur 7 bis 9 in die Unterputzdose liegen diese Säulen innerhalb der Ausnehmungen 25.

Die Schürze 22 ist, mit Ausnahme der Ausnehmung 25, kreiszylindrisch ausgebildet, lässt aber an der Ober- und Unterseite des Werkzeugadapters einen Platz frei. Auf der Innenseite der Schürze sind radial verlaufende Verstärkungsstege 27 ausgebildet. An der Oberseite des Werkzeugadapters, die auch in den Figuren oben dargestellt ist, enthält das Gehäuse 20 eine Ausnehmung 28 in Form einer Kerbe. Diese Kerbe wird von einer Libelle 29 durchquert, die damit von der Vorderseite des Gehäuses her sichtbar ist, andererseits aber durch die Unterbringung in dieser Ausnehmung 28 gegen Beschädigungen gesichert ist.

Figur 9 zeigt jetzt einen Querschnitt längs Linie IX-IX in Figur 7. Mit dem Sechskantansatz 21, der in dem Gehäuse 20 drehbar gelagert ist, ist ein erstes Zahnrad 30 verbunden. Dieses erste Zahnrad 30 kämmt mit zwei weiteren Zahnrädern 31, die ebenfalls in dem Gehäuse gelagert sind. Diese kämmen wiederum mit zwei äußeren Zahnrädern 32, die über eine Drehmoment begrenzende Kupplung mit den Abtriebsaufnahmen für die Schrauberbits 24 verbunden sind. Die Zahnräder 32 sind als Zahnkränze ausgebildet und weisen zwei axiale Kerben 33 auf. Die Wellen 34, auf denen sie aufgesetzt sind, haben ebenfalls eine in axialer Richtung verlaufende Kerbe, in die Stifte 35 eingesetzt sind. Diese werden von einer Feder, die längs eines Durchmessers verläuft, nach außen gedrückt. Wenn die Stifte 35 nach außen gedrückt sind, nehmen die Zahnkränze 32 die Wellen 34 mit. Wird ein bestimmtes Drehmoment überschritten, so werden die Stifte 35 wegen der teilkreisförmigen Querschnittsform der Kerben 33 gegen die Wirkung der Feder nach innen gedrückt, so dass dann die Zahnkränze 32 gegenüber der Welle 34 verdreht werden können. Auf diese Weise ist für die beiden Schrauberbits 24 eine eigene Drehmomentbegrenzung vorgesehen, die beide unabhängig voneinander arbeiten. Es wird damit sichergestellt, dass die Schrauben der Unterputzdose unabhängig von der jeweiligen Einbausituation korrekt festgeschraubt werden.

Der Werkzeugadapter wird folgendermaßen verwendet. Der Sechskantansatz 21 wird in eine Aufnahme eines Elektroschraubers eingesetzt. Dann wird die Schürze 22 in eine in ein Loch der Wand eingesetzte Hohlwanddose eingesteckt. Die Säulen, in denen die Schrauben der Hohlwanddose vorhanden sind, kommen in die Ausnehmung 25 der Schürze 22 zu liegen. Mit Hilfe der Libelle 29 wird die exakte horizontale Position ermittelt. Während des weiteren Einschiebens des Werkzeugadapters führt die Schürze 22, deren Außendurchmesser dem Innendurchmesser der Hohlwanddose entspricht, den Werkzeugadapter. Schließlich gelangen die Schrauberbits 24 in die Antriebsvertiefungen der Schrauben zu liegen. Jetzt kann der Einschraubvorgang beginnen. Sobald die Schrauben fest gezogen sind, werden die Drehmomentbegrenzungen zwischen dem Zahnkränze 32 und den Wellen 34 wirksam. Daran kann der Monteur erkennen, dass der Vorgang beendet ist.

## Patentansprüche

1. Werkzeugadapter zur Befestigung insbesondere von Hohlwanddosen, mit
1.1 einer Antriebsaufnahme (3) für einen Drehantrieb,
1.2 mindestens einer Abtriebsaufnahme (4) für ein Werkzeugbit oder dergleichen, die
1.2.1 mit der Antriebsaufnahme (3) drehverbunden ist, sowie mit
1.3 einer zum Angriff an der Hohlwanddose bestimmten Positioniereinrichtung.

2. Werkzeugadapter nach Anspruch 1, bei dem die Positioniereinrichtung derart ausgebildet ist, dass sie das Ausweichen der Wand der Hohlwanddose nach innen verhindert.

3. Werkzeugadapter nach Anspruch 1 oder 2, bei dem die Positioniereinrichtung derart ausgebildet ist, dass sie an zwei diametral gegenüberliegenden Stellen der Hohlwanddose angreift, vorzugsweise an der Innenseite der Wand der Hohlwanddose.

4. Werkzeugadapter nach einem der vorhergehenden Ansprüche, bei dem die Positioniereinrichtung derart ausgebildet ist, dass sie die Abtriebsaufnahme (4) gegenüber der durch das Werkzeugbit zu verdrehenden Schraube ausrichtet.

5. Werkzeugadapter nach einem der vorhergehenden Ansprüche, bei dem die Antriebsaufnahme (3) und die Abtriebsaufnahme (4) in zwei parallelen beabstandeten Plattenelementen (1, 2) gelagert sind.

6. Werkzeugadapter nach einem der vorhergehenden Ansprüche, bei dem in der Abtriebsaufnahme (4) ein Werkzeugbit eingesetzt bzw. angeordnet ist.

7. Werkzeugadapter nach einem der vorhergehenden Ansprüche, mit zwei gleichsinnig angetriebenen Abtriebsaufnahmen (4).

8. Werkzeugadapter nach einem der vorhergehenden Ansprüche, bei dem die Drehverbindung ein umlaufendes Getriebeelement aufweist, insbesondere einen Riemen (5) oder dergleichen.

9. Werkzeugadapter nach einem der vorhergehenden Ansprüche, bei dem die Drehverbindung mindestens ein Zahnrad (13) aufweist.

10. Werkzeugadapter nach einem der vorhergehenden Ansprüche, bei dem ein Werkzeugbit direkt eingesetzt bzw. angeordnet und angetrieben wird.

11. Werkzeugadapter nach einem der vorhergehenden Ansprüche, bei dem eine Libelle zum waagrechten Ausrichten der Hohlwanddose im Bohrloch vorgesehen ist.

12. Werkzeugadapter nach einem der vorhergehenden Ansprüche, mit einer Drehmomentbegrenzung in jedem Abtrieb.

13. Werkzeugadapter nach einem der vorhergehenden Ansprüche, mit einem Gehäuse (20), dass die Getriebeverbindung zwischen der Antriebsaufnahme (3) und der mindestens einen Abtriebsaufnahme (4) einschließt.

14. Werkzeugadapter nach einem der vorhergehenden Ansprüche, bei dem gibt Positioniereinrichtung eine der Form der Hohlwanddose entsprechende zur Anlage an der Innenseite der Wand der Hohlwanddose bestimmte Schürze (22) aufweist, die sich über mindestens einen Teil des Umfangs der Hohlwanddose erstreckt.

15. Werkzeugadapter nach Anspruch 14, bei dem die axiale Erstreckung der Schürze (22) größer ist als die Länge der Schrauberbits (24).

16. Werkzeugadapter nach einem der Ansprüche 11 bis 15, bei dem die Libelle (29) in einer Gehäuseausnehmung (28) angeordnet ist.
